## Europäisches Patentamt

## European Patent Office

## Office européen des brevets

(19)

(11) Veröffentlichungsnummer: **0 088 897**
**B1**

(12) **EUROPÄISCHE PATENTSCHRIFT**

(45) Veröffentlichungstag der Patentschrift:
**22.04.87**

(51) Int. Cl.⁴: **A 01 C 5/06**

(21) Anmeldenummer: **83101429.5**

(22) Anmeldetag: **15.02.83**

(54) Walkreifen für eine Einzelkornsämaschine.

(30) Priorität: **12.03.82 DE 8206869 U**

(43) Veröffentlichungstag der Anmeldung:
**21.09.83 Patentblatt 83/38**

(45) Bekanntmachung des Hinweises auf die Patenterteilung:
**22.04.87 Patentblatt 87/17**

(84) Benannte Vertragsstaaten:
**AT BE CH DE FR LI NL**

(56) Entgegenhaltungen:
**DE - A - 2 632 257**
**DE - B - 2 810 221**
**FR - A - 2 257 217**
**FR - A - 2 406 946**
**US - A - 2 331 819**
**US - A - 2 668 490**
**US - A - 3 181 622**
**US - A - 4 158 392**

(73) Patentinhaber: **SCHMOTZER AGRARTECHNIC GmbH, Rothenburger Strasse 45, D-8532 Bad Windsheim (DE)**

(72) Erfinder: **Nagel, Kurt, Paul Gerhard Weg 4, D-8532 Bad Windsheim (DE)**

(74) Vertreter: **Richter, Bernhard, Dipl.-Ing., Beethovenstrasse 10, D-8500 Nürnberg 20 (DE)**

### Beschreibung

Die Erfindung betrifft einen Walkreifen gemäss dem Oberbegriff des Anspruches 1. Sogenannte Walkreifen sind in der Regel hohle Gummireifen, jedoch ohne Pressluftfüllung, die sich also nur durch ihre Gummispannung in der gewölbten Form halten und beim Abrollen auf der Erde zusammendrücken. Bei diesem Abrollen werden die Saatkörner in die Erde gedrückt. Zugleich bewirkt der hierbei eintretende Walkvorgang, dass sich der Reifen selbständig von an ihm noch anhaftender Erde reinigt. Bei solchen Walkreifen ist es bekannt, aussenseitig und etwa mittig in deren Umfangsrichtung verlaufend eine Ausformung in Form einer umlaufenden Wulst vorzusehen, welche in die Saatfurche bis zu den Saatkörnern eindringt und diese in die Erde presst. Dabei erzeugt die Wulst eine durchlaufende bandförmige Rille, obgleich die Saatkörner in der Regel in einem Abstand von ca. 10 bis 20 cm liegen und damit die Bildung einer durchlaufend eingedrückten, bandförmigen Rille nicht nötig wäre. Insbesondere ist von Nachteil, dass dabei die einzelnen Körner nicht so intensiv und tief in die Erde eingedrückt werden, wie es an sich wünschenswert ist. Dieser Nachteil besteht trotz des Umstandes, dass die Breite der Wulst geringer, in der Regel sogar erheblich geringer als die Dicke des Reifens ist.

Aus der US-A-3 181 622 ist zwar ein Walkreifen bekannt, der aufgrund seiner Zusammendrückbarkeit selbstreinigend ist. Hiermit soll, neben dem vorgenannten Selbstreinigungseffekt, eine gleichmässige Dicke des Erdbodens oberhalb des Saatgutes erreicht werden. Dieser Vorveröffentlichung fehlt aber die mittig in der Umfangsrichtung des Reifens verlaufende Ausformung, deren Breite geringer ist als die Reifendicke. Ausserdem befasst sich diese Vorveröffentlichung nicht mit der nachstehend erläuterten Problemstellung der vorliegenden Erfindung und zeigt auch nicht die zur Lösung dieser Problemstellung nachstehend angegebenen Mittel. Die US-A-2 331 819 und US-A-4 158 392 zeigen keine zusammendrückbaren Walkreifen, sondern Räder mit entlang der Umfangsrichtung gewellten und in sich starren Laufflächen. Sie erfüllen daher weder den Oberbegriff des Anspruches 1, noch befassen sie sich mit der Problemstellung und Lösung der vorliegenden Erfindung. Vielmehr soll bei US-A-2 331 819 eine gleichmässige Tiefe des Saatgutes und bei US-A-4 158 392 (bekannt als sogenannte Cambridge-Walze) eine Verfestigung des Bodens unter Erzielung von Rillen zwecks Abfluss des Regenwassers erreicht werden.

Die Erfindung geht dagegen von einem Walkreifen gemäss dem Oberbegriff des Anspruches 1 aus und hat dazu sich die Aufgabe gestellt, bei einem solchen Walkreifen dessen mittige Ausformung dahingehend zu verbessern, dass ein noch intensiverer Druck auf die Saatkörner ausgeübt und diese daher tiefer in den Erdboden eingedrückt werden.

Zur Lösung dieser Aufgabe dienen, ausgehend vom Oberbegriff des Anspruches 1, zunächst die Merkmale des Kennzeichens des Anspruches 1. Diese Nocken drücken sich und damit das Korn tiefer ein, als es mit einer umlaufenden Wulst möglich ist. Auch für den Fall, dass sich das Korn nicht direkt unterhalb des Nockens befindet, wird es von seiner Druckkraft in die Erde gedrückt, da die Druckkraft der Nocken nicht nur senkrecht nach unten, sondern auch nach vorn und nach hinten wirkt und damit auch seitlich zum Nocken verlagert vorgesehene Körner miterfasst. Insbesondere gilt dies für die bevorzugte Ausführungsform der Erfindung gemäss Anspruch 2, weil hierbei ein Druckteil etwa in Form eines Kegels geschaffen ist, der das Erdreich sowohl nach unten, als auch zur Seite drückt. Ein Zusetzen der Nockenlücken ist nicht zu befürchten, da sie sich durch den Walkvorgang im belasteten Zustand zusammendrücken udn anschliessend wieder öffnen. Damit wird etwa anhaftende Erde abgesprengt. Die Elastizität des Walkreifens und damit sein Zusammendrücken und Wiederauseinandergehen beim Abrollen ergibt somit zwei zusammenwirkende Effekte, nämlich zum einen das verbesserte Eindrücken der Körner und zum zweiten des vorgenannte Absprengen der Erde zwischen den Nocken. Wäre der zweitgenannte Effekt nicht gegeben, so würde ein Walkreifen nach der Erfindung insbesondere bei feuchten und schweren Böden am Umfang der Ausformung keine Zwischenräume zwischen den Nocken mehr haben, wodurch der erstgenannte Effekt nicht mehr eintreten könnte. Durch das unterbrochene Band, das beim Abrollen des Walkreifens durch die einzelnen Nocken auf dem Boden entsteht, wird ein weiterer Vorteil erreicht. Hierdurch bricht das Erdreich nach vorausgegangenen starken Niederschlägen und Verkrustung für die aufgehende Saat besser auf. Andernfalls wäre es für das Saatgut oft unmöglich durchzustossen.

Die Merkmale des Anspruches 7 tragen in verstärktem Masse dazu bei, dass jedes der einzusäenden Körner von einem Nocken erfasst und entsprechend tief eingedrückt wird.

Weitere Merkmale und Vorteile der Erfindung sind den weiteren Unteransprüchen, sowie dem nachstehend erläuterten Ausführungsbeispiel und der dazugehörigen Zeichnung zu entnehmen. In der Zeichnung zeigt:

Fig. 1: eine Seitenansicht eines Teiles der Maschine mit Reifen,

Fig. 2: den Reifen gemäss Fig. 1 in der Stirnansicht,

Fig. 3: einen Schnitt gemäss der Linie III–III in Fig. 1, jedoch in einem demgegenüber grösseren Massstab, nämlich in natürlicher Grösse,

Fig. 4: den Nockenkranz belastet und unbelastet,

Fig. 5: ein weiteres Ausführungsbeispiel in einem Schnitt ähnlich Fig. 3.

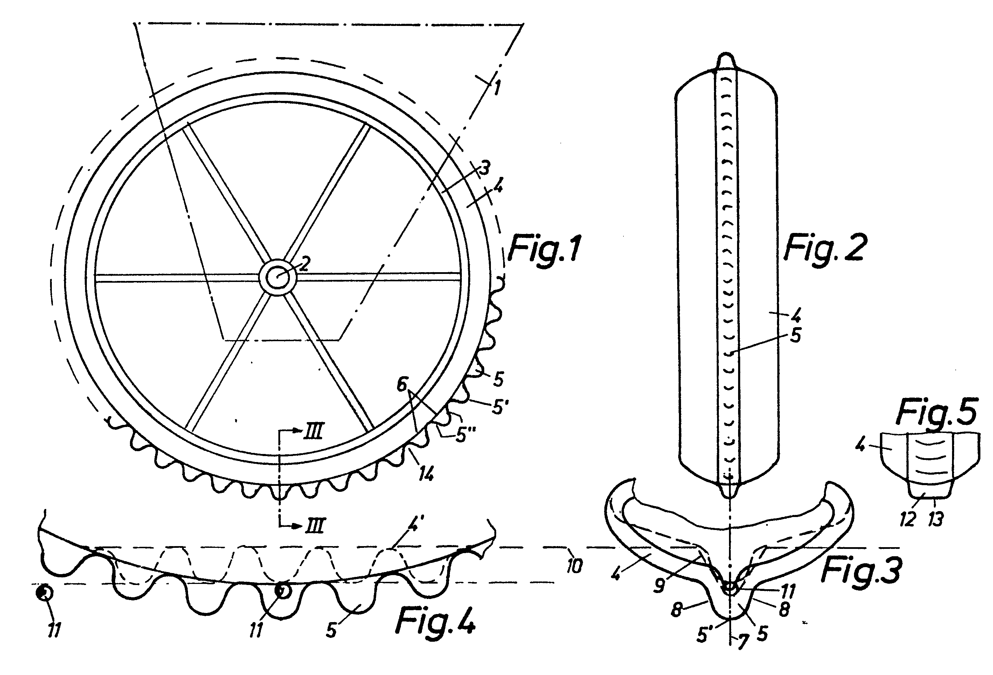

Die nur in Fig. 1 schematisch und strichpunktiert angedeutete Einzelkornsämaschine 1 trägt an einer Achse oder Welle 2 das Rad 3 mit dem Walkreifen 4. Im Ausführungsbeispiel der Fig. 1 bis 4 sind die Nocken 5 an ihren Spitzen 5′ abgerundet und an ihren Flanken 5″ etwa konisch verlaufend, wobei die Füsse 6 ineinander übergehen. Diese, bevorzugte Ausführungsform der Erfindung hat zur Folge, dass einerseits die erläuterten Nachteile einer durchlaufenden, nicht unterbrochenen bandförmigen Rille vermieden sind, andererseits aber jedes Korn erfasst und entsprechend stark und tief in die Erde eingedrückt wird. Dies gilt sowohl für Körner, die sich direkt unterhalb der Nockenspitze 5' befinden, als auch für Körner, die demgegenüber seitlich verlagert sind, da diese von den Flanken 5'' erfasst und eingedrückt werden.

Fig. 3 zeigt, dass es sich empfiehlt, auch die links und rechts der Mittellängsebene 7 (siehe Fig. 2, 3) des Rades gelegenen Flanken 8 der Nokken 5 etwa konisch verlaufen zu lassen und zwar derart, dass sich dieser Konus der Nockenspitze 5' verjüngt. Dies gibt etwa kegelförmige Eindrücke 9 in den Erdboden, dessen Oberfläche mit 10 schematisch dargestellt ist.

Die Fig. 3 und 4 zeigen, wie tief die Nocken eindringen und ein Korn 11 entsprechend tief in die Erde einpressen können. Der belastete Abschnitt des elastischen Walkreifens drückt sich entsprechend zusammen, während der entlastete Bereich des Walkreifens aufgrund dessen Elastizität wieder die Lage einnimmt, die er vor der Belastung hatte. Das Zusammendrücken des Walkreifens im belasteten Zustand kann maximal bis zu seinem Anliegen an die Felge erfolgen. Diese maximale Zusammendrückung bei Anliegen an der Felge ist gestrichelt in Fig. 4 schematisch eingezeichnet. Aus dem Vergleich dieser Darstellung und der Darstellung des unbelasteten Walkreifens mit durchgezogenen Linien ist ersichtlich, dass die Walkarbeit etwa vorhandene Erde absprengt. Zur Darstellung der Fig. 3 und 4 ist noch zu sagen, dass die Körner 11 in der richtigen Lage zu den kegelförmigen Eindrücken 9 dargestellt sind. Das gleiche gilt für die o.g. gestrichelte Darstellung des belasteten Walkreifens. Dagegen ist der mit durchgezogenen Linien gezeichnete unbelastete Walkreifen in der Darstellung der Fig. 3 und 4 nicht in einer solchen räumlichen Relation zu den Eindrücken 9 und den Saatkörnern 11 zu verstehen; vielmehr soll mit dieser Zeichnung des unbelasteten Walkreifens nur dessen Formgebung im unbelasteten Zustand erläutert werden.

Fig. 5 zeigt eine Stirnansicht analog Fig. 4 mit einem Nocken 12, der gegenüber der Spitze 5' des Nocken 4 eine verbreiterte Auflagefläche 13 hat, die einen breiteren Bereich eindrücken kann als ein Nocken gemäss dem Ausführungsbeispiel der Fig. 1 bis 3.

Es empfiehlt sich gemäss der Zeichnung die Nocken 5, 12 in regelmässigen Abständen anzuordnen, wobei die mittlere Nockenbreite etwa gleich der mittleren Breite des jeweiligen Zwischenraumes 14 zwischen diesen Nocken sein kann. Dies gilt auch für das Ausführungsbeispiel der Fig. 5. Auch die übrigen anhand der Figuren 1 und 4 erläuterten Merkmale und Vorteile können beim Ausführungsbeispiel der Fig. 5 vorgesehen sein.

## Patentansprüche

1. Walkreifen für eine Einzelkornsämaschine, der sich beim Abrollen auf der Erde aufgrund der Belastung wesentlich zusammendrückt und nach dem Abrollen in die ursprüngliche Form zurückgeht und der für das Eindrücken der Saatkörner in die Erde aussenseitig und etwa mittig mit einer in seiner Umfangsrichtung verlaufenden Ausformung versehen ist, deren Breite geringer ist als die Reifendicke, dadurch gekennzeichnet, dass die Ausformung aus einer Reihe von in Umfangsrichtung des Reifens hintereinander liegenden Nocken (5, 12) besteht, zwischen denen sich je ein Zwischenraum (14) befindet.

2. Walkreifen nach Anspruch 1, dadurch gekennzeichnet, dass sich die Nocken zu ihrem Fuss (6) hin verbreitern, wobei diese Füsse ineinander übergehen.

3. Walkreifen nach Anspruch 1 oder 2, dadurch gekennzeichnet, dass die Nocken in der Seitenansicht (Fig. 1, 4) betrachtet abgerundete Spitzen (5') aufweisen.

4. Walkreifen nach einem der Ansprüche 1 bis 3, dadurch gekennzeichnet, dass die Nocken in der Stirnansicht (Fig. 2, 3) eine abgerundete Spitze (5') und zwei Seitenflanken (8) aufweisen, die einen sich zur Spitze (5') hin verjüngenden Konus bilden.

5. Walkreifen nach einem der Ansprüche 1 bis 3, dadurch gekennzeichnet, dass die Nocken (12) in der Stirnansicht (Fig. 5) eine verbreiterte Auflage- und Druckfläche (13) aufweisen.

6. Walkreifen nach einem der Ansprüche 1 bis 5, dadurch gekennzeichnet, dass die Nocken (5, 12) in regelmässigen Abständen hintereinander angeordnet sind.

7. Walkreifen nach einem der Ansprüche 1 bis 6, dadurch gekennzeichnet, dass in der Seitenansicht betrachtet, die mittlere Nockenbreite gleich der mittleren Zwischenraumbreite ist.

## Claims

1. Deformable wheel for a precision planter which, when rolling over the ground, is substantially compressed, preferably as far as the rim, owing to the load, and returns to the original shape after rolling, and which is provided on the outside and approximately centrally with a profile which extends in its circumferential direction and whose width is less than the tyre thickness, for pressing the grains of seed into the ground, characterized in that the profile consists of a series of cams (5, 12) lying successively in the circumferential direction of the tyre, between each of which there is an intermediate space (14).

2. Deformable wheel according to Claim 1, characterized in that the cams widen toward their foot (6), these feet merging into each other.

3. Deformable wheel according to Claim 1 or 2, characterized in that the cams have, when viewed from the side (Figs. 1, 4), rounded tips (5').

4. Deformable wheel according to one of Claims 1 to 3, characterized in that the cams have, in side view (Figs. 2, 3), a rounded tip (5′) and two side flanks (8), which form a cone tapering toward the tip (5′).

5. Deformable wheel according to one of Claims 1 to 3, characterized in that the cams (12) have, in front view (Fig. 5), a widened bearing and pressing surface (13).

6. Deformable wheel according to one of Claims 1 to 5, characterized in that the cams (5, 12) are arranged at regular intervals behind one another.

7. Deformable wheel according to one of Claims 1 to 6, characterized in that, viewed from the side, the average cam width is equal to the average intermediate space width.

**Revendications**

1. Roue autonettoyante flexible pour semoir de précision qui se comprime sensiblement, de préférence jusqu'à la jante, lors de son roulage sur le sol, du fait de la charge, et revient à la forme initiale après le roulage, et qui, pour le plombage des semis dans la terre, est pourvue extérieurement et à peu près au milieu d'une partie en saillie s'étendant sur tout son diamètre, et dont la largeur est inférieure à l'épaisseur du pneu, roue caractérisée par le fait que la partie en saillie est constituée par des cames (5, 12) qui sont placées en ligne l'une derrière l'autre dans le sens du diamètre et entre lesquelles se trouve un espace vide (4).

2. Roue autonettoyante flexible selon la revendication 1, caractérisée par le fait que les cames s'élargissent vers leurs pied (6) de manière que les pieds soient reliés entre eux.

3. Roue autonettoyante flexible selon la revendication 1 ou 2, caractérisée par le fait que les cames présentent en vue de côté (fig. 1, 4) des pointes arrondies (5′).

4. Roue autonettoyante flexible selon l'une des revendications 1 à 3, caractérisée par le fait que les cames présentent en vue frontale (fig. 2, 3) une pointe arrondie (5′) et deux flancs latéraux (8), qui forment vers la pointe un cône qui se rétrécit.

5. Roue autonettoyante flexible selon l'une des revendications 1 à 4, caractérisée par le fait que les cames (12) présentent, en vue frontale (fig. 5) une surface élargie de contact et de pression.

6. Roue autonettoyante flexible selon l'une des revendications 1 à 5, caractérisée par le fait que les cames (5, 12) sont disposées l'une derrière l'autre à intervalles réguliers.

7. Roue autonettoyante flexible selon l'une des revendications 1 à 6, caractérisée par le fait que, vue de côté, la largeur centrale de la came correspond à la largeur centrale des écarts.

*Fig.1*

*Fig.2*

*Fig.3*

*Fig.4*

*Fig.5*

0 088 897